Europäisches Patentamt

European Patent Office

Office européen des brevets

(11) Numéro de publication :

# **0 040 108**
# **B1**

(12) **FASCICULE DE BREVET EUROPÉEN**

(45) Date de publication du fascicule du brevet :
04.07.84

(21) Numéro de dépôt : **81400168.1**

(22) Date de dépôt : **03.02.81**

(51) Int. Cl.³ : **B 60 P   3/34, E 05 F   1/12**

(54) **Charnière élastique, notamment pour la manœuvre des parois d'une caravane pliante.**

(30) Priorité : **13.05.80 FR 8010699**

(43) Date de publication de la demande :
**18.11.81 Bulletin 81/46**

(45) Mention de la délivrance du brevet :
**04.07.84 Bulletin 84/27**

(84) Etats contractants désignés :
**AT BE CH DE GB IT LI LU NL SE**

(56) Documents cités :
**BE-A-   528 045**
**US-A- 2 920 919**

(73) Titulaire : **LENOIR & MERNIER S.A.**
**B.P. No 12**
**F-08120 Bogny-sur-Meuse Ardennes (FR)**

(72) Inventeur : **Pierrard, Jean**
**13, rue de la Vallée**
**F-08120 Bogny/Meuse Ardennes (FR)**

(74) Mandataire : **Madeuf, Claude Alexandre Jean et al**
**CABINET MADEUF 3, avenue Bugeaud**
**F-75116 Paris (FR)**

Jouve, 18, rue St-Denis, 75001 Paris, France

## Description

De plus en plus les caravanes pliantes sont utilisées du fait qu'elles permettent, d'une part, une économie d'énergie lors du transport sur route puisque le volume de la caravane est plus petit et, de ce fait, la résistance à la pénétration de l'air est plus réduite et, d'autre part, un garage plus aisé pendant les périodes de mortes-saisons puisqu'une fois pliée, et comme cela a été dit précédemment, la caravane occupe un volume beaucoup plus réduit. Or, le grand inconvénient de ces caravanes pliantes réside dans la manœuvre des panneaux latéraux et terminaux de la position repliée à la position verticale ainsi que dans l'élévation du toit constitué par le couvercle fermant normalement la caravane lorsqu'elle est pliée.

Jusqu'à présent on a cherché à utiliser différents dispositifs tels que des vérins hydrauliques, pneumatiques et autres mais ceux-ci n'ont pas donné entière satisfaction car, d'une part, ils sont d'une fabrication assez compliquée et donc onéreuse et, d'autre part, cette fabrication compliquée les rend fragiles et instables.

On connaît également par le brevet BE-A-528 045 une charnière élastique pour la manœuvre de portes ou de couvercles comportant une barre de torsion formant ressort qui sert en même temps de pivot pour la charnière mais qui n'est pas adaptée à la manœuvre étanche d'élévation et de repliement des parois latérales et terminales ainsi que du toit d'une caravane pliante.

La présente invention remédie à ces inconvénients en créant une charnière élastique qui, en l'utilisant entre les panneaux, tend normalement à redresser ces derniers vers la position verticale sans nécessiter d'effort, par décompression progressive et réciproquement, pour le repliement des panneaux latéraux et terminaux à la position horizontale lors de la fermeture de la caravane soit pour son transport sur route, soit pour son garage pendant les temps morts.

Par rapport au BE-A-528 045 qui décrit déjà une charnière élastique pour la manœuvre relative de parois comprenant un élément élastique constitué par une barre de torsion présentant sensiblement la forme d'un S dont la partie centrale horizontale sert d'axe de rotation à une charnière située entre le panneau fixe et 1 panneau mobile tandis que la branche verticale inférieure de la barre prend appui contre le panneau fixe et la branche verticale supérieure contre le panneau mobile, l'invention est caractérisée en ce que la charnière, traversée par la partie centrale de la barre, est constituée par deux éléments concentriques dont l'un, formant l'élément intérieur, est prolongé par une pièce d'emboîtement sur la partie supérieure du panneau fixe tandis que l'élément supérieur comportant également une pièce d'emboîtement sur la partie inférieure du panneau mobile comporte, en outre, une projection extérieure, formant jet d'eau pour assurer l'étanchéité entre le panneau fixe et le panneau mobile, en position relevée.

Une forme de réalisation de l'objet de l'invention est représentée, à titre d'exemple, aux dessins annexés.

La figure 1 est une vue en perspective de la partie avant d'une caravane pliante montrant le fonctionnement du panneau avant supérieur mobile dont le mouvement de relèvement et abaissement est provoqué par des barres de torsion placées à l'intérieur concentriquement aux charnières.

La figure 2 est une vue, à plus grande échelle, montrant le détail d'une charnière.

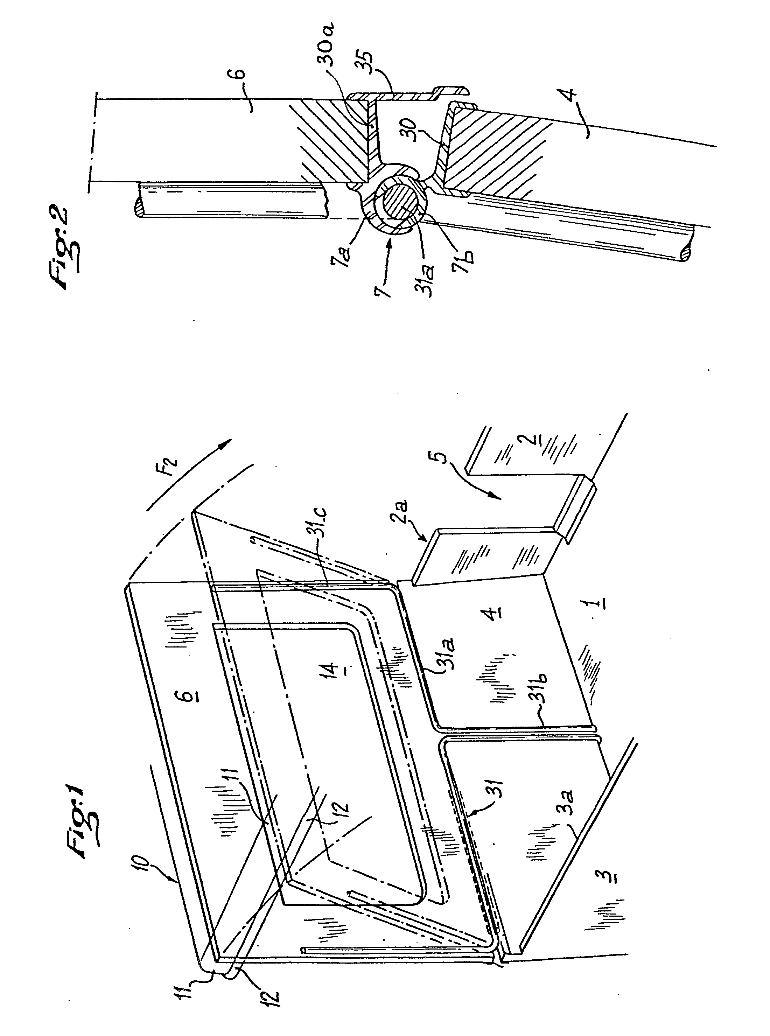

A la fig. 1 on a représenté partiellement l'avant d'une caravane pliante 1 dont on voit les panneaux latéraux fixes inférieurs 2, 3, le panneau fixe avant 4, l'emplacement 5 de la porte d'entrée de la caravane et le panneau mobile avant 6 qui est monté sur des charnières 7 (voir fig. 2) de façon à pouvoir se replier à l'horizontale sur les flancs 2a, 3a des panneaux fixes latéraux 2, 3 et lorsque le panneau avant 6, les panneaux latéraux supérieurs et le panneau arrière supérieur (ces trois derniers éléments n'étant pas représentés) sont repliés sur le dessus de la partie fixe de la caravane, le toit 10 (voir fig. 1) forme le couvercle assurant la protection totale de la remorque servant de base à la caravane pliante.

Comme on peut le voir à la fig. 1, le couvercle 10 peut comporter des bords latéraux évasés 11 venant se placer à l'extérieur des panneaux fixes de la remorque en assurant ainsi une évacuation vers l'extérieur, du fait des jets d'eau 12, de l'eau de pluie pouvant tomber sur le couvercle 10 formant le toit de la caravane pliante. On voit à la fig. 1 que le panneau mobile avant 6 peut comporter une fenêtre 14.

A la fig. 2 on voit que le panneau avant 6 est monté sur des charnières 7 dont l'élément extérieur 7a enserre l'élément intérieur cylindrique 7b qui est solidaire, par une pièce d'emboîtement 30, de la partie supérieure du panneau fixe 4. L'élément 7a est solidaire de la partie inférieure du panneau mobile 6 par l'intermédiaire d'une pièce d'emboîtement 30a. Les charnières ainsi constituées servent de chemin de guidage à des barres de torsion 31 (voir fig. 1) qui sont composées d'une partie centrale horizontale 31a logée dans les charnières 7, d'une partie verticale inférieure 31b placée contre les panneaux fixes inférieurs et de la partie verticale supérieure 31c se trouvant contre la partie intérieure des panneaux mobiles, dans le cas présent du panneau avant mobile 6. Comme dans le cas précédent, lors du repliement dans le sens de la flèche $F_2$ (voir fig. 1) du panneau avant 6, les barres de torsion 31 sont déformées élastiquement et, lors du mouvement de redressement du panneau 6 dans le sens inverse de la flèche $F_2$ (fig. 1), la décompression des barres de torsion facilite l'élévation du panneau mobile et en particulier du panneau 6 dans le cas présent. En même temps ce mouvement provoque l'élévation du toit 10. Les barres de torsion 31 sont réalisées normalement en acier spécial à ressort, avec des caractéristiques et des dimensions (diamètre, longueur, angles) adaptées aux efforts correspondant à chaque type de panneau (latéraux, avant, arrière) et à chaque type de caravane.

Il est prévu, sur les charnières 7, des jets d'eau 35 solidaires des éléments extérieurs 7a de chaque charnière 7 afin d'assurer une étanchéité complète entre le panneau fixe et le panneau mobile considéré. Pour assurer la liaison entre les panneaux 4 et 6, les barres de torsion 31 peuvent être d'une seule pièce pliée aux extrémités (31b et 31c) ou en plusieurs éléments. Dans ce cas, la partie 31a reste une barre de torsion mais usinée à une extrémité par exemple à pans (ou cannelée) et un bout de la partie 31b est emmanché sur l'extrémité correspondante de la barre de torsion 31a. Cette variante permet de modifier et d'ajuster la contrainte de la barre suivant les besoins par simple décalage de un ou plusieurs pans. Il est possible de réaliser ce montage sur les parties 31b ou 31c ou encore sur les deux côtés de la barre de torsion 31a.

## Revendication

Charnière élastique entre parois, notamment pour la manœuvre d'élévation et de repliement des parois latérales et terminales ainsi que du toit d'une caravane pliante, dans laquelle l'élément élastique est constitué par une barre de torsion (31) présentant sensiblement la forme d'un S dont la partie centrale horizontale (31a) sert d'axe de rotation à une charnière (7) située entre le panneau fixe (4) et le panneau mobile (6) tandis que la branche verticale inférieure (31b) de la barre prend appui contre le panneau fixe (4) et la branche verticale supérieure (31c) contre le panneau mobile (6), caractérisée en ce que la charnière (7), traversée par la partie centrale (31a) de la barre, est constituée par deux éléments concentriques (7a, 7b) dont l'un (7b), formant l'élément intérieur, est prolongé par une pièce d'emboîtement (30) sur la partie supérieure du panneau fixe (4) tandis que l'élément supérieur comportant également une pièce d'emboîtement (30a) sur la partie inférieure du panneau mobile (6), comporte en outre, une projection extérieure (35) formant jet d'eau pour assurer l'étanchéité entre le panneau fixe et le panneau mobile, en position relevée.

## Claim

Elastic hinge between walls, particularly for the raising and folding control of the side and end walls as well as the roof of a foldable caravan, in which the elastic element is formed by a twisting bar (31) having substantially the sape of an S the central horizontal part (31a) of which is used as a rotation axis for a hinge (7) placed between the fixed pannel (4) and the mobile panel (6), while the lower vertical arm (31b) of the bar rests against the fixed panel (4) and the upper vertical arm (31c) against the mobile panel (6), characterized in that the hinge (7), crossed through by the central part (31a) of the bar, is formed by two concentrical elements (7a, 7b), one (7b) of which, making the inner element, is extended by a fitting part (30) on the upper part of the fixed panel (4) while the upper element, comprising also a fitting par (30a) on the lower part of the mobile panel (6), comprises further an outer protrusion (35) forming a weather board for ensuring tightness between the fixed panel and the mobile panel, in the raised position.

## Anspruch

Elastisches Scharnier, das zwischen Wänden angeordnet ist, insbesondere zum Aufrichten und Zurückklappen der Seiten- und Abschlusswandungen sowie des Daches eines faltbaren Caravans, bei welchem das elastische Teil aus einem im wesentlichen S-förmigen Drehstab (31) besteht, dessen waagerechter Mittelasbschnitt (31a) als Drehachse für das Scharnier (7) dient, welches zwischen der feststehenden Platte (4) und der beweglichen Platte (7) liegt, während der untere vertikale Schenkel (31b) des Drehstabs sich gegen die feststehende Platte (4) abstützt, und der obere vertikale Schenkel (31c) sich gegen die bewegliche Platte (6) abstützt, dadurch gekennzeichnet, dass das durch den Mittelabschnitt (31a) des Drehstabes durchquerte Scharnier aus zwei konzentrischen Elementen (7a, 7b) besteht, von denen das eine (7b), das das innere Element bildet, sich in einem Verschlussteil (30) auf dem oberen Abschnitt der feststehenden Platte (4) fortsetzt, während der obere Abschnitt, der ebenfalls einen Verschlussteil (30a) auf dem unteren Abschnitt der beweglichen Platte (6) aufweist, zusätzlich einen nach aussen herausragenden Teil (35) trägt, der einen Spritzschutz für Wasser bildet, um die Abdichtung zwischen der feststehenden Platte und der beweglichen Platte in aufrechter Stellung sicherzustellen.

*Fig.1*

*Fig.2*

0 040 108